# EUROPEAN PATENT APPLICATION

(11) **EP 4 197 694 A1**
(43) Date of publication of application: **21.06.2023**
(21) Application number: 22211886.1
(22) Date of filing: 07.12.2022
(51) Int. Cl.: B23Q 11/10, B23Q 17/00, G01M 3/00

(54) **SPINDLE ASSEMBLY INCLUDING A LEAK DETECTION SYSTEM**

(30) Priority: 15.12.2021 IT 202100031433
(71) Applicant: SCM Group S.p.A., 47921 Rimini (RN) (IT)
(72) Inventor: PERROTTI, Luca, 47921 RIMINI (RN) (IT)
(74) Representative: Tiburzi, Andrea

(57) **Abstract**

The present invention relates to a spindle unit (M), that can be installed on a machine for machining pieces made of glass, stone, marble, ceramic, metal, composite materials, and the like, including a hollow chamber (1), at least one spindle (2), arranged inside said hollow chamber (1), at the end of which a working tool (21) can be coupled, at least one fluid transport device (3) that can be coupled to convey a fluid, in particular water, towards said at least one spindle (2), a detection system (5), coupled to said hollow chamber (1), capable of conveying any possible leaks of said fluid deriving from said transport device fluids (3) and to detect any such conveyed leaks.

## Description

The present invention relates to a spindle unit comprising a leak detection system.

### Field of the invention

In more detail, the invention relates to a spindle unit for working glass, stone, ceramic, metal, fiberglass, comprising a system of the above type, designed and realized in particular for detecting fluid leaks such as coolant, but which can be used for leak detection of other types of liquids, such as water.

In the following, the description will be directed to the detection of water leaks in glass and stone working machines, but it is clear that the same should not be considered limited to this specific use.

### Prior art

As is well known, machines for working pieces made of glass, stone, and the like currently exist. These machines require a continuous flow of water towards the tool that performs the machining, with a cooling lubricant function.

Typically, water is channeled into a conduit inside the spindle via a rotary joint, then travels through the hollow interior of the tool and into the workpiece area.

During operation, the contact surface between the fixed portion and the rotating portion may be subject to water leaks, due to wear of the joint itself, accidental damage or a sudden change in water pressure.

Water leaks cause the decrease or interruption of the water supply to the tool, with consequent risks of damage to the tool itself and/or to the workpiece. In the event of a leak, an operator must promptly take care of it and interrupt the operation of the spindle unit.

An obvious disadvantage of these solutions is the possibility that a water leak will not be noticed by an operator, with the consequent damage to the tool, to the workpiece or even to the spindle of the spindle unit.

Spindle units comprising a system for detecting water leaks are also known. These detection devices detect the water that is deposited by gravity on them.

An apparent problem of these solutions is the possibility that, when the spindle changes its inclination during the execution of machining operations, the water does not deposit on the detection devices, thus preventing detection.

A further problem with these solutions is the possibility that water remains deposited on the detection device, even after the leak has been stopped, resulting in false detection of a leak.

### Scope of the invention

It is, therefore, scope of the present invention to provide a spindle unit comprising a system for detecting water leaks from the rotary joint which allows timely detection of the leak.

A further scope of the present invention is to provide a spindle unit comprising a water leak detection system, which is simple to implement.

### Object of the invention

It is specific object of the present invention a spindle unit, that can be installed on a machine for machining pieces made of glass, stone, marble, ceramic, metal, composite materials, and the like, including a hollow chamber, at least one spindle, arranged inside said hollow chamber, at the end of which a working tool can be coupled, at least one fluid transport device that can be coupled to convey a fluid, in particular water, towards said at least one spindle, a detection system, coupled to said hollow chamber, capable of conveying any possible leaks of said fluid deriving from said transport device fluids and to detect any such conveyed leaks.

Further according to the invention, said fluid transport device comprises a main duct for receiving and conveying said fluid, a secondary duct, for receiving said fluid conveyed by said main conduit and conveying it towards said pieces and/or towards said machining tool, a rotating joint, to put said main duct in fluid communication with said secondary duct, wherein said detection system is capable of conveying said possible leaks of said fluid deriving from said rotating joint, and to detect said eventual losses conveyed.

Still according to the invention, said detection system comprises at least one detection device, arranged in fluid communication with said hollow chamber, to detect said possible leaks of said fluid.

Preferably according to the invention, said detection system comprises at least one conveying device, to convey said possible leaks of said fluid from said hollow chamber towards said at least one detection device.

Always according to the invention, said detection device is one or more capacitive sensors, or photoelectric sensors, or optical sensors, or acoustic sensors.

Further according to the invention, said hollow chamber comprises a vent valve, to evacuate said possible leaks of said fluid from said hollow chamber, and said conveying device is configured to convey said possible leaks of said fluid towards said vent valve.

Still according to the invention, an opening is obtained in said hollow chamber, through which said conveying device conveys said possible leaks of said fluid, and said opening is closed by said vent valve.

Preferably according to the invention, said conveying device is a nozzle, arranged in said hollow chamber, and configured to emit a jet of gas, especially air.

Always according to the invention, said spindle unit comprises a logic control unit connected to said detection system, to receive data relating to said possible leaks of said fluid, and connected to said spindle, to control the operation of said spindle unit on the basis of said data received from said detection system.

Further according to the invention, said logic control unit is configured to emit acoustic, and/or visual, and/or tactile alarm signals and/or to block the operation of said spindle unit as a function of said data received from said detection system.

Still according to the invention, said logic control unit is configured to send said alarm signals to wearable devices, and/or mobile devices, and/or desktop PCs.

Preferably according to the invention, said logic control unit is configured to send said alarm signals to a *cloud* server, which in its turn sends said alarm signals to wearable devices, and/or mobile devices, and/or desktop PCs.

### Brief description of the figures

The present invention will be now described, for illustrative but not limitative purposes, according to its preferred embodiments, with particular reference to the figures of the enclosed drawings, wherein:

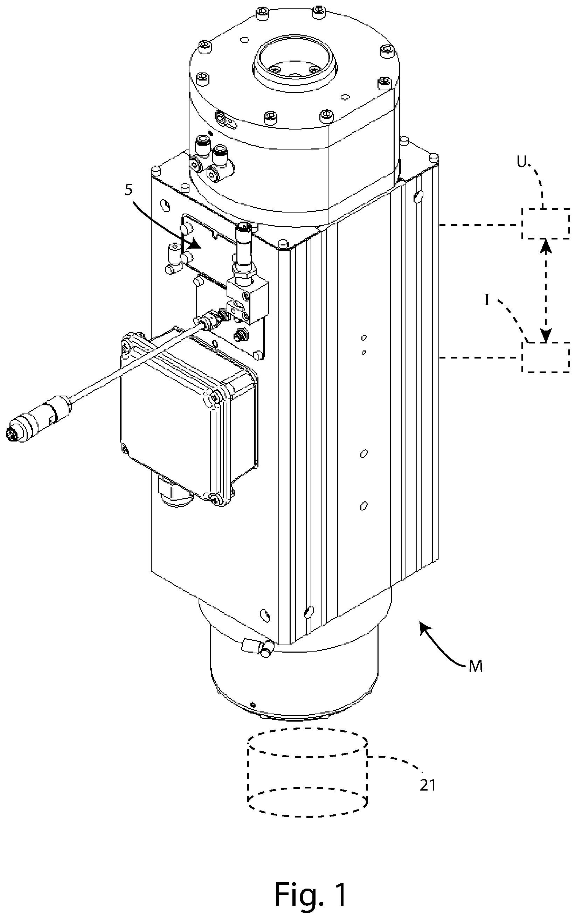

figure 1 shows an isometric view of a spindle unit comprising a leak detection system, object of the present invention;

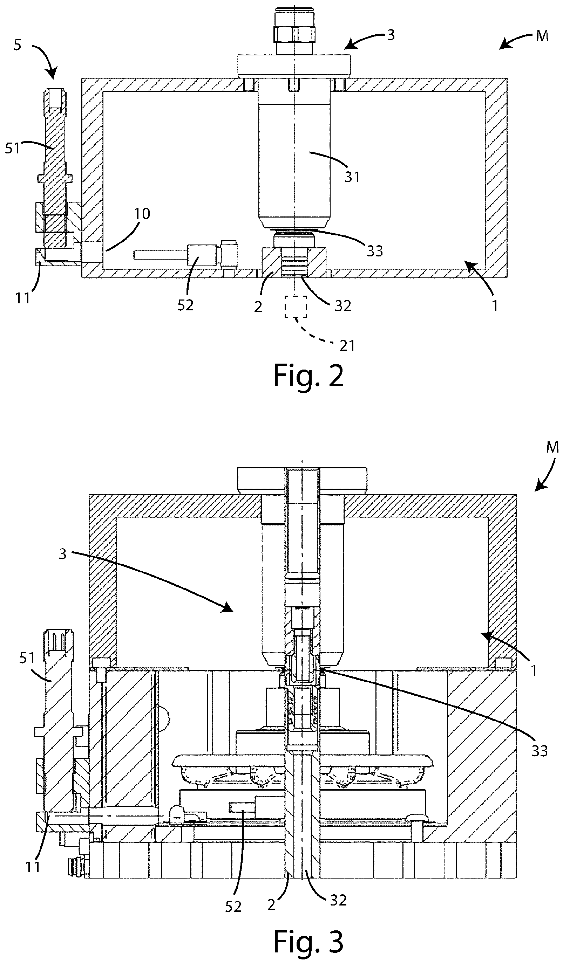

figure 2 shows an axonometric view of a detail of figure 1; and
figure 3 shows a sectional view of a detail of the spindle unit shown in figure 1.

### Detailed description

In the various figures, similar parts will be indicated with the same reference numbers.

With reference to the accompanying figures, it is possible to observe a spindle unit M for machining pieces made in glass, stone, ceramic, metal, fiberglass, and the like.

Said spindle unit M comprises a hollow chamber 1, at least one spindle 2, arranged inside said hollow chamber 1, a fluid transport device 3, to convey a fluid, such as a coolant liquid or water, towards the spindle 2, a logic control unit U, and a user interface I.

The spindle 2 can be coupled to a tool 21, by means of a tool holder, to perform machining operations on said pieces.

Said fluid transport device 3 comprises a main duct 31, which is capable of receiving a fluid and conveying it towards the spindle 2, a secondary duct 32, capable of conveying said fluid towards the tool 21, and a rotary joint 33, which puts said main duct 31 and secondary duct 32 into fluid communication.

The spindle unit M also comprises a detection system 5, coupled to the hollow chamber 1, to convey and detect any fluid leaks from said rotary joint 33.

The sensing system 5 comprises a sensing device 51 and a conveying device 52.

Said sensing device 51 is arranged in fluid communication with said hollow chamber 1, to detect any fluid leaks.

In particular, said detecting device 51 is a capacitive sensor or more capacitive sensors.

It is possible that said detecting device 51 is one or more photoelectric or optical or ultrasonic or acoustic sensors.

In particular, said detecting device 51 can be a photocell, a laser, an infrared sensor, a video camera, an ultrasound sensor, a load cell, and the like.

Said conveying device 52 is configured to convey said fluid leaks from the hollow chamber 1 towards the detection device 51. In particular, said conveying device 52 is a nozzle that emits a jet of gas, in particular of compressed air, directed towards said detection device 51.

In particular, an opening 10 is formed in said hollow chamber 1, through which the fluid losses conveyed by said conveying device 52 can pass.

Said detection device 51 faces said opening 10 and is capable of detecting said fluid leaks conveyed by said conveying device 52.

Said conveying device 52, in addition to emitting a jet of gas to convey the fluid leaks towards said detecting device 51, is capable of emptying said opening 10 then freeing said detecting device 51 from the leaks, if these are not continuous, to avoid unwanted stops.

The hollow chamber 1 comprises a vent valve 11, configured to expel any fluid leaks from the hollow chamber 1. The vent valve 11 is arranged so as to expel the fluid after the latter has been detected by said sensing device 51.

In particular, said vent valve 11 is arranged in correspondence with said opening 10.

The conveying device 52 is also configured to convey said fluid towards said vent valve 11, so as to facilitate its exit from the hollow chamber 1.

The control logic unit U is connected to said spindle 2, to said detection system 5, and to said user interface I. In said control logic unit U one or more fluid loss thresholds are stored.

Said control logic unit U is capable of receiving data relating to any leaks of said fluid, and of controlling the operation of the spindle unit M on the basis of said data received from said detection system 5.

Said control logic unit U is configured to emit acoustic, and/or visual, and/or tactile alarm signals and/or to block the operation of said spindle unit M as a function of said data received from said detection system 5.

Furthermore, said control logic unit U is configured to send said alarm signals to wearable devices, and/or mobile devices, and/or desktop PCs.

Said control logic unit U is also configured to send said alarm signals to a cloud server, which in turn sends said alarm signals to wearable devices, and/or mobile devices, and/or desktop PCs.

The operation of the spindle group M, object of the present invention, is as follows.

During the machining of a piece with said tool 21, said fluid is conveyed from said main duct 31 to said secondary duct 32, through said rotary joint 33, to then arrive at the piece worked by the tool 21.

The rotary joint 33 can be subject to fluid leaks, due to wear of the rotary joint 33 itself, to accidental damage or to a sudden change in pressure of said fluid, due to the different sections of said main duct 31 and secondary duct 32.

In the event of a leak, the fluid enters the hollow chamber 1.

The conveying device 52 conveys the fluid to the sensing device 51.

The sensing device 51 detects the leak and sends a corresponding signal to the control logic unit U.

The control logic unit U compares the received signal with a stored loss threshold. If the signal received is greater than said threshold, the control logic unit U sends a signal to the spindle 2 and interrupts the machining. Alternatively, the control logic unit U sends an alarm signal to the user interface I.

The conveying device 52 conveys the fluid towards said opening 10 and then towards said vent valve 11, which ousts it from the hollow chamber 1.

If the leak stops, all the fluid from the leak is made to flow towards the outside of the hollow chamber 1. The detection device 51, therefore, no longer detects the fluid, and sends a corresponding signal to the control logic unit U.

The control logic unit U sends a signal to spindle 2 to resume machining. Alternatively, the control logic unit U sends an all-clear signal to the user interface I.

### Advantages

An apparent advantage of the present invention is the possibility of having a spindle unit comprising a system for detecting water leaks from the rotary joint which allows for a timely detection of the leak.

A further advantage of the present invention is the possibility of having a spindle unit comprising a system for detecting water leaks which is simple to realize.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Spindle unit (M), that can be installed on a machine for machining pieces made of glass, stone, marble, ceramic, metal, composite materials, and the like, including
a hollow chamber (1),
at least one spindle (2), arranged inside said hollow chamber (1), at the end of which a working tool (21) can be coupled,
at least one fluid transport device (3) that can be coupled to convey a fluid, in particular water, towards said at least one spindle (2),
said spindle unit (M) being **characterized in that** it comprises a detection system (5), coupled to said hollow chamber (1), capable of conveying any possible leaks of said fluid deriving from said transport device fluids (3) and to detect any such conveyed leaks.

2. Spindle unit (M) according to the preceding claim, **characterized in that** said fluid transport device (3) comprises
a main duct (31) for receiving and conveying said fluid,
a secondary duct (32), for receiving said fluid conveyed by said main conduit (31) and conveying it towards said pieces and/or towards said machining tool (21),
a rotating joint (4), to put said main duct (31) in fluid communication with said secondary duct (32), and
**in that** said detection system (5), is capable of conveying said possible leaks of said fluid deriving from said rotating joint (4), and to detect said eventual losses conveyed.

3. Spindle unit (M) according to any one of the preceding claims, **characterized in that** said detection system (5) comprises at least one detection device (51), arranged in fluid communication with said hollow chamber (1), to detect said possible leaks of said fluid.

4. Spindle unit (M) according to the preceding claim, **characterized in that** said detection system (5) comprises at least one conveying device (52), to convey said possible leaks of said fluid from said hollow chamber (1) towards said at least one detection device (51).

5. Spindle unit (M) according to the preceding claim, **characterized in that** said detection device (51) is one or more capacitive sensors, or photoelectric sensors, or optical sensors, or acoustic sensors.

6. Spindle unit (M) according to the preceding claim, **characterized**
**in that** said hollow chamber (1) comprises a vent valve (11), to evacuate said possible leaks of said fluid from said hollow chamber (1), and
**in that** said conveying device (52) is configured to convey said possible leaks of said fluid towards said vent valve (11).

7. Spindle unit (M) according to the preceding claim, **characterized**
**in that** an opening (10) is obtained in said hollow chamber (1), through which said conveying device (52) conveys said possible leaks of said fluid, and
**in that** said opening (10) is closed by said vent valve (11).

8. Spindle unit (M) according to any one of claims 4-7, **characterized in that** said conveying device (52) is a nozzle (52), arranged in said hollow chamber (1), and configured to emit a jet of gas, especially air.

9. Spindle unit (M) according to any one of the preceding claims, **characterized in that** it comprises a logic control unit (U) connected to said detection system (5), to receive data relating to said possible leaks of said fluid, and connected to said spindle (2), to control the operation of said spindle unit (M) on the basis of said data received from said detection system (5).

10. Spindle unit (M) according to the preceding claim, **characterized in that** said logic control unit (U) is configured to emit acoustic, and/or visual, and/or tactile alarm signals and/or to block the operation of said spindle unit (M) as a function of said data received from said detection system (5).

11. Spindle unit (M) according to the preceding claim **characterized in that** said logic control unit (U) is configured to send said alarm signals to wearable devices, and/or mobile devices, and/or desktop PCs.

12. Spindle unit (M) according to any one of claims 10 or 11, **characterized in that** said logic control unit (U) is configured to send said alarm signals to a *cloud* server, which in its turn sends said alarm signals to wearable devices, and/or mobile devices, and/or desktop PCs.
